# EUROPÄISCHE PATENTANMELDUNG

(11) **EP 1 046 478 A1**
(43) Veröffentlichungstag der Anmeldung: **25.10.2000**
(21) Anmeldenummer: 99107568.0
(22) Anmeldetag: 15.04.1999
(51) Int. Cl.: B26D 7/30, G01N 9/02, G01B 11/24

(54) **Verfahren und Vorrichtung zum Trennen einzelner Teilstücke vorgebbaren Gewichtes von einem Massestück**

(71) Anmelder: Hermann Wein GmbH & Co. KG, Schwarzwäder Schinkenräucherei, 72250 Freudenstadt-Musbach (DE)
(72) Erfinder: Kappler, Eberhard, 72250 Freudenstadt-Musbach (DE)
(74) Vertreter: Patentanwälte Westphal, Mussgnug & Partner

(57) **Zusammenfassung**

In Supermärkten werden z. B. Käse- oder Schinkenstücke unterschiedlichen aber nicht definierbaren Gewichtes angeboten, z. B. Stücke zu 185 g, zu 317 g, zu 455 g usw. Um nun dem Verbraucher Stücke genau definierten und auch gestaffelten Gewichtes anbieten zu können, wird ein in Teilstücke zu zerlegendes Massestück (M) z. B. ein Schinkenstück mittels Kameras (K) und Projektoren (PR) abgetastet, um in einem Computer (C) ein dreidimensionales Bild zu erzeugen. Der Computer (C) berechnet aufgrund der Dichte und des dreidimensionales Bildes des Schinkenstücks (M) die einzelnen Trennabstandswerte bzw. Dicken der Teilstücke. Aufgrund dieser Werte steuert der Computer (C) eine Trennvorrichtung (S) zum Trennen der Teilstücke vom Massestück (M). Die Erfindung ist besonders für die Verarbeitung von Nahrungsmitteln geeignet, jedoch nicht auf diesen Einsatzbereich beschränkt. So können beispielsweise auch Holzscheiben gleichen Gewichtes aus Holzstangen oder aus Baumstämmen gesägt werden.

## Beschreibung

Die Erfindung betrifft ein Verfahren und Vorrichtung zum Trennen einzelner Teilstücke vorgebbaren Gewichtes von einem Massestück.

Derartige Massestücke, die in Teilstücke portioniert werden, können z. B. Nahrungsmittel wie Käse oder geräucherter Schinken sein. Von einem Schinken- oder Käsestück werden beispielsweise Stücke gleicher Dicke abgeschnitten, gewogen, verpackt und etikettiert. Diese Arbeitsschritte werden bevorzugt automatisch durchgeführt.

Ein erster Nachteil liegt nun darin, daß die einzelnen Teilstücke unterschiedliches Gewicht haben. Ein zweiter Nachteil ist darin zu sehen, daß das Gewicht der einzelnen Teilstücke nicht exakt vergebbar ist. So wiegt ein Schinkenstück z. B. 185 g, ein anderes 317 g, während ein drittes 455 g wiegen kann. Wünschenswert ist es jedoch, dem Verbraucher im Supermarkt Stücke gleichen und gestaffelten Gewichtes anbieten zu können. Sinnvoll sind z. B. Stücke mit einer Gewichtsstaffelung von 100 g bis 1000 g in 100 g-Schritten mit nur geringen Gewichtsabweichungen. Der Verbraucher hat dann die Wahl zwischen Stücken zu 100 g, 200 g, 300 g bis schließlich 1000 g in jeweils 100 g-Schritten.

Es ist daher Aufgabe der Erfindung, ein Verfahren und eine Vorrichtung anzugeben, die es ermöglicht, mit möglichst einfachen Mitteln ein Massestück in einzelne Teilstücke vorgebbaren Gewichtes zu portionieren.

Das erfindungsgemäße Verfahren löst diese Aufgabe durch folgende Verfahrensschritte:

Von dem in Teilstücke zu zerlegenden Massestück wird mittels Projektoren und Kameras ein dreidimensionales Bild erzeugt;

Ein Computer berechnet aufgrund der Dichte und des dreidimensionalen Bildes des Massestückes die einzelnen Trennabstandswerte;

Die vom Computer berechneten Trennabstandswerte steuern eine Trennvorrichtung zum Trennen der Teilstücke vom Massestück.

Anhand des eingangs erwähnten Beispieles eines Nahrungsmittels wird das erfindungsgemäße Verfahren nun beschrieben und erläutert.

Ein Schinkenstück, das auf einer durchsichtigen Platte, z. B. einer Glasplatte, liegt, oder von Hand oder mittels einer Transportvorrichtung über die Platte bewegt wird, wird von mehreren Projektoren angestrahlt und mittels mehrerer Kameras abgetastet, um aus deren Meßwerten in einem Computer ein dreidimensionales Bild des Schinkenstückes zu erzeugen. Die Projektoren erzeugen ein Raster oder Linien auf dem Massestück. Aus der Addition dieser Rasterbilder bzw. aus der Berechnung der Abweichung der Linien wird das Volumen des Massestücks berechnet. Mittels einer ersten Waage wird das Gewicht des Schinkenstückes ermittelt und dem Computer zugeführt, der aus dem Gewicht des Schinkenstückes und aus dem berechneten Volumen des Schinkenstückes seine Dichte berechnet. Mittels einer Transportvorrichtung wird nun das Schinkenstück zu einer Trennvorrichtung, die beispielsweise als Schneidevorrichtung ausgestaltet ist, transportiert. Die Schneide- und die Transportvorrichtung werden vom Computer nun so gesteuert, daß die Schneidevorrichtung Teilstücke vorgebbaren Gewichtes vom Schinkenstück abschneidet. Die Steuersignale des Computers werden über eine Schnittstelle an die Schneidevorrichtung weitergegeben. Je nach Programmierung des Computers können beispielsweise Stücke gleichen oder unterschiedlichen vorgebbaren Gewichtes vom großen Stück abgeschnitten werden.

Die Dichte des Schinkenstückes kann wie bereits erwähnt durch Messung seines Gewichtes und seines Volumens bestimmt werden. Weil aber die Dichte von geräucherten Schinken- oder Käsestücken in engen Toleranzbereichen konstant ist, kann auch die Dichte des Massestückes manuell in den Computer eingegeben werden.

Bei zu starken Dichteabweichungen bei den einzelnen geräucherten Schinkenstücken werden ein zusätzlicher Projektor und eine Kamera den Anschnitt des Schinkens aufnehmen. Es können dann im Computer unterschiedliche Dichtewerte für die verschiedenen Arten der geräucherten Schinken gespeichert werden.

Darüber hinaus ist es auch denkbar, auf den oder die Projektoren vollständig zu verzichten, sofern die Kamera(s) eine entsprechende Bilderfassung ermöglichen. Derartige Kameras sind allerdings derzeit noch nicht im Handel erhältlich.

Eine Ausgestaltung des erfindungsgemäßen Verfahrens, die im Anspruch 4 beschrieben ist, sieht vor, daß hinter der Schneidevorrichtung die Teilstücke mittels einer zweiten Waage gewogen werden. Liegen die Gewichte der einzelnen Teilstücke nicht mehr in einem vorgegebenen Toleranzbereich, dann korrigiert der Computer die Trennabstände; unter Trennabständen sind die Abstände zu verstehen, gemäß denen das Massestück geschnitten wird. Das erfindungsgemäße Verfahren ermöglicht es, das Schinkenstück in Teilstücke, so z. B. mit einem Gewicht von 200 g, zu zerschneiden.

Es werden nun Vorrichtungen zur Duchführung des erfindungsgemäßen Verfahrens anhand der Figuren beschrieben und erläutert.

Es zeigen
- Fig. 1: ein erstes Ausführungsbeispiel einer Vorrichtung zur Durchführung des erfindungsgemäßen Verfahrens,
- Fig. 2: ein zweites Ausführungsbeispiel einer Vorrichtung zur Durchführung des erfindungsgemäßen Verfahrens,
- Fig. 3: eine Draufsicht eines von einem Computer erzeugten dreidimensionalen Bildes eines geräucherten Schinkens.

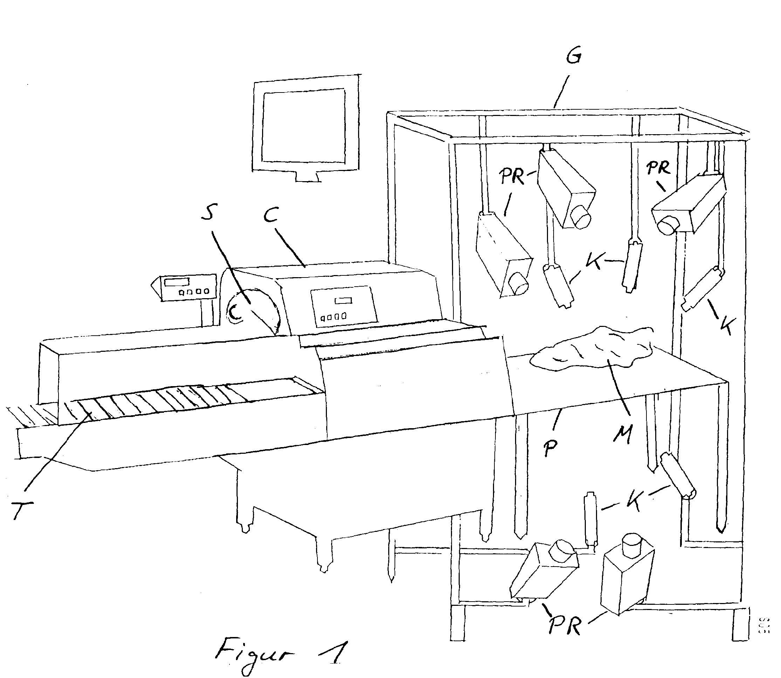

Es wird nun das in der Fig. 1 abgebildete erste Ausführungsbeispiel einer Vorrichtung zur Durchführung des erfindungsgemäßen Verfahrens beschrieben und erläutert.

Auf einer durchsichtigten Platte P, z. B. einer Glasplatte, liegt das in Teile gleichen Gewichtes zu portionierende Massestück M, beispielsweise ein Schinkenstück. An einem Gestelle G sind oberhalb und unterhalb der Platte P mehrere Projektoren PR und mehrer Kameras K angeordnet.

Zur Abtastung eines Schinkenstückes, die sich in Folge der unregelmässigen Oberfläche mit Hintereinschnitten und der unregelmässigen Form des Schinkenstückes schwierig gestaltet, ist es zweckmässig, wie im Anspruch 15 angegeben ist, oberhalb der Platte P drei Projektoren PR und drei Kameras K anzuordnen, während unterhalb der Platte P zwei Projektoren PR und zwei Kameras K vorgesehen sind.

Mittels einer Transportvorrichtung T oder von Hand wird das von den Kameras K abgetastete Schinkenstück M zu einer Schneidevorrichtung S befördert, die - von einem Computer C gesteuert - scheibenförmige Teilstücke vorgegebenen, z. B. gleichen Gewichtes, von dem Schinkenstück M abschneidet.

Als weitere Möglichkeit ist vorgesehen, die Schneidevorrichtung mit einem herausnehmbaren Greifarm zu konstruieren. Der Greifarm greift vor der Bildverarbeitung das geräucherte Schinkenstück. Im Anschluß an die Bildverarbeitung wird der Greifarm mit dem geräucherten Schinkenstück in der Schneidevorrichtung über eine Magnetvorrichtung oder eine spezielle Halterung angebracht. Dies dient zur Vermeidung einer eventuellen Verformung des Schinkenstücks nach der Bildverarbeitung durch das Einspannen in den Greifarm.

Diese einzelnen abgeschnittenen Schinkenstücke können nun in weiteren nicht dargestellten Vorrichtungen in Folie gepackt und etikettiert werden.

Wie im Anspruch 6 angegeben ist, kann das Schinkenstück M auch nur mittels einer Kamera K und eines Projektors PR abgetastet werden, wenn das Schinkenstück M von der Transportvorrichtung T um seine Linksachse gedreht und entlang seiner Längsachse bewegt wird.

Eine Alternative zu dem in Anspruch 6 beschriebenen Abtastverfahren mittels nur einer Kamera und nur eines Projektors ist im Anspruch 7 angegeben. Um das Schinkenstück M abzutasten, werden eine Kamera K und ein Projektor PR in einer schraubenförmigen Linie um das Schinkenstück M herum bewegt.

Um die Kameras K und die Projektoren PR vor Verschmutzung zu schützen und um die Möglichkeit zur Reinigung entsprechend den im Lebensmittelgesetz vorgegebenen Hygienebestimmungen zu geben, sind sie, wie im Anspruch 16 angegeben ist, in Gehäuse eingebaut.

Um die Kameras K und die Projektoren PR bei der Verarbeitung von Schinken vor der salzhaltigen fettigen Luft zu schützen, ist es zweckmässig, wie im Anspruch 17 beschrieben ist, in den Gehäusen Überdruck vorzusehen, so daß die salzhaltige und fettige Luft, die von den Schinkenstücken verursacht wird, nicht in die Kameras und Projektoren eindringen kann.

Je nach der Wärmeerzeugung der Lampen in den Projektoren kann es erforderlich sein, eine Vorrichtung zur Kühlung, z. B. eine Lamellenkühlung, vorzusehen.

Als Kameras zur Abtastung des Massestückes können beispielsweise Standardkameras mit einer Standardauflösung von 768 x 576 Bildpunkten eingesetzt werden. Ein weiterer Vorteil der erfindunsgemäßen Vorrichtung besteht darin, daß auch für die Projektoren standardisierte Geräte genügen. Besonders geeignet ist z. B. der Linienprojektor Typ LCT-1280 der Firma ADW GmbH, D-72636 Frickenhausen.

Weil bei der Verarbeitung von Nahrungsmitteln sehr strenge hygienische Maßstäbe einzuhalten sind, ist bei einer im Anspruch 19 angegebenen Ausgestaltung der erfindungsgemäßen Vorrichtung eine Reinigungsvorrichtung zum Reinigen der durchsichtigen Platte P sowie der Kameras K und der Projektoren PR vorgesehen. Vorzugsweise kommt als Reinigungsvorrichtung ein Niederdruckreiniger oder ein Dampfstrahler zum Einsatz, auch ein mechanischer Sprüharm mit integrierter Gummilippe, der zunächst die Glasplatte besprüht und anschließend mit der Gummilippe abzieht, ist denkbar.

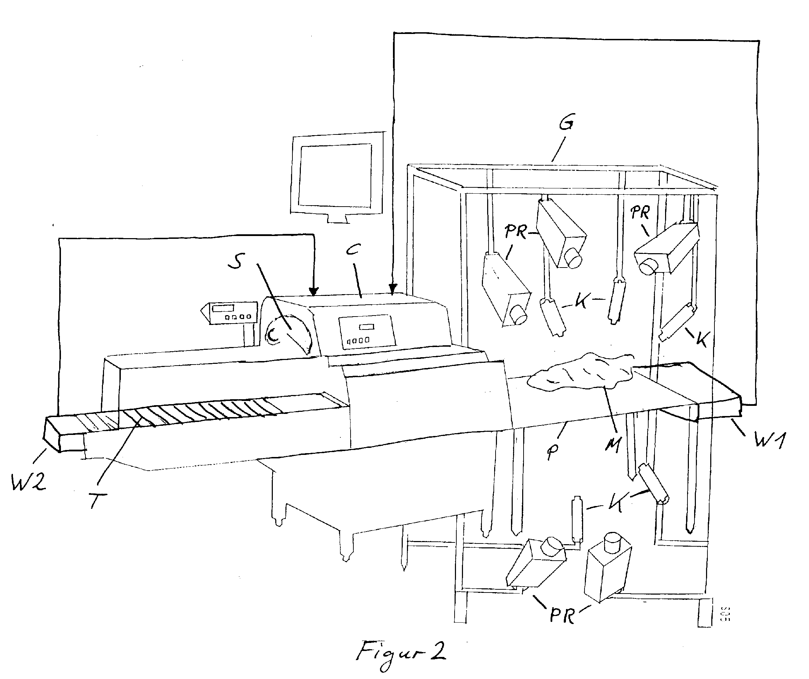

Es wird nun das in der Fig. 2 gezeigte zweite Ausführungsbeispiel einer Vorrichtung zur Durchführung des erfindungsgemäßen Verfahrens beschrieben und erläutert.

Dieses zweite Ausführungsbeispiel ist gegenüber dem ersten Ausführungsbeispiel durch eine erste Waage W1 ergänzt, die vor der durchsichtigen Platte P angedordnet ist. Mittels dieser ersten Waage W1 wird das Gewicht des Schinkenstückes M gemessen und zur Berechnung der Dichte an den Computer C weitergeleitet.

Bei einer vorteilhaften Ausgestaltung ist vorgesehen, die Platte P als Auflagefläche der Waage zu nutzen.

Hinter der Schneidevorrichtung S, welche Teilstücke von dem Schinkenstück M schneidet, ist eine zweite Waage W2 angeordnet, welche das Gewicht der einzelnen Teilstücke mißt und diese Meßwerte an den Computer C weiterleitet. Wie bereits bei der Erläuterung des erfindunsgemäßen Verfahren beschrieben wurde, korrigiert der Computer C die Trenn- bzw. Schneideabstände, wenn die von der zweiten Waage W2 gemessenen Gewichte der Teilstücke nicht innerhalb eines vorgebbaren Toleranzbereiches liegen.

Das erfindunsgemäße Verfahren ist besonders gut zum Zerschneiden von geräucherten Schinkenstücken geeignet. Wenn von einem Schinkenstück Scheiben gleicher Dicke abgeschnitten werden, was sich leicht automatisieren läßt, haben die geschnittenen Scheiben jedoch den Nachteil, daß sie alle unterschiedliche Gewichte aufweisen. Gemäß dem erfinderischen Verfahren wird nun für jedes Teilstück diejenige Dicke aus dem Volumen und dem Gewicht des Massestückes berechnet, die ein vorgebbares Gewicht des Teilstücks ergibt.

Obwohl die Erfindung besonders gut für das Zerteilen von Nahrungsmitteln wie z. B. Schinkenstücken geeignet ist, ist sie keinesfalls auf diesen Anwendungsbereich beschränkt. Es können auch Teilstücke aus anderer Materie, z. B. Holzscheiben aus einem Baumstamm oder ähnliches, geschnitten werden.

Das Trennen der einzelnen Teilstücke vom Massestück kann z. B. durch Schneiden oder Sägen erfolgen.

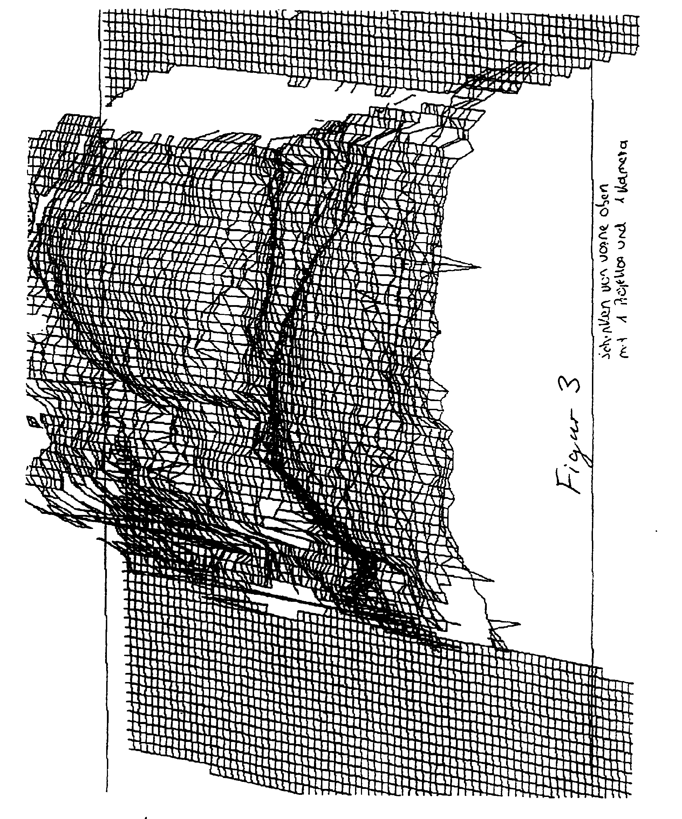

Die Fig. 3 zeigt ein von einem Computer erzeugtes dreidimensionales Bild eines Schinkenstücks von oben.

## Patentansprüche

1. Verfahren zum Trennen einzelner Teilstücke vorgebbaren Gewichtes von einem Massestück **gekennzeichnet** durch folgende Verfahrensschritte:
Von dem in Teilstücke zu zerlegenden Massestück (M) wird mittels Kamera (K) und erforderlichenfalls mittels Projektoren (PR) ein dreidimensionales Bild erzeugt;
ein Computer (C) berechnet aufgrund der Dichte und des dreidimensionales Bildes des Massestücks (M) die einzelnen Trennabstandswerte bzw. -Dicken der Teilstücke;
die von Computer (C) berechneten Trennabstandswerte bzw. - Dicken steuern eine Trennvorrichtung (S) zum Trennen der Teilstücke vom Massestück (M).

2. Verfahren nach Anspruch 1,
**dadurch gekennzeichnet**, daß die Dichte des Massestücks (M) aufgrund seines dreidimensionalen Bildes und seines mittels einer ersten Waage (W1) erfassten Gewichtes berechnet wird.

3. Verfahren nach Anspruch 1,
**dadurch gekennzeichnet**, daß die Dichte des Massestücks (M) in den Computer (C) eingegeben wird.

4. Verfahren nach Anspruch 1, 2 oder 3,
**dadurch gekennzeichnet**, daß das Gewicht der einzelnen Teilstücke mittels einer zweiten Waage (W2) bestimmt wird, im Computer (C) mit dem vorgegebenen Gewicht verglichen wird und daß bei Abweichungen des tatsächlichen gemessenen Gewichtes vom vorgegebenen Gewicht der Computer (C) eine Korrektur der Trennabstandswerte bzw. der -Dicken vornimmt.

5. Verfahren nach einem der vorangehenden Ansprüche,
**dadurch gekennzeichnet**, daß das in Teilstücke zu zerteilende Massestück (M) mittels einer Transportvorrichtung (T) über eine durchsichtige Platte (P) bewegt wird, daß oberhalb und unterhalb der durchsichtigen Platte (P) die Projektoren (PR) und die Kameras (K) angeordnet sind und daß das Teilstück von der Transportvorrichtung (T) in die Trennvorrichtung (S) befördert wird.

6. Verfahren nach einem der vorangehenden Ansprüche 1 bis 4,
**dadurch gekennzeichnet**, daß das in Teilstücke zu zerteilende Massestück (M) mittels einer Transportvorrichtung (T) um seine Längsachse gedreht und entlang seiner Längsachse bewegt wird und daß das Massestück (M) von einer Kamera (K) und einem Projektor (PR) abgetastet wird.

7. Verfahren nach einem der vorangehenden Ansprüche 1 bis 4,
**dadurch gekennzeichnet**, daß zur Abtastung des in Teilstücke zu zerteilende Massestückes (M) eine Kamera (K) und erforderlichenfalls ein Projektor (PR) in einer schraubenförmigen Linie um das Massestück (M) herumgeführt werden.

8. Verfahren nach einem der vorangehenden Ansprüche,
**dadurch gekennzeichnet**, daß das Massestück (M) in Teilstücke gleichen Gewichtes aufgeteilt wird.

9. Verfahren nach einem der vorangehenden Ansprüche,
**dadurch gekennzeichnet**, daß das Massestück ein Nahrungsmittel ist.

10. Verfahren nach Anspruch 9,
**dadurch gekennzeichnet**, daß es sich bei dem Nahrungsmittel um ein Fleisch- oder geräuchertes Schinkenstück handelt.

11. Vorrichtung zur Durchführung des Verfahrens nach Anspruch 1,
**dadurch gekennzeichnet**, daß eine Transportvorrichtung (T) vorgesehen ist, um das Massestück (M) über eine durchsichtige Platte (P) zu befördern, daß oberhalb und unterhalb der durchsichtigen Platte (P) Kameras (K) und erforderlichenfalls Projektoren (PR) angeordnet sind, daß am Ende der durchsichtigen Platte (P) die Trennvorrichtung (S) angeordnet ist, und daß die Kameras (K) über Meßleitungen mit dem Computer (C) verbunden sind, dessen Steuerausgang mit dem Steuereingang der Trennvorrichtung (S) verbunden ist.

12. Vorrichtung nach Anspruch 11,
**dadurch gekennzeichnet**, daß vor der Trennvorrichtung (S) eine erste Waage (W1) zum Wiegen des Massestücks (M) angeordnet ist, deren Meßausgang mit dem Computer (C) verbunden ist.

13. Vorrichtung nach Anspruch 12,
**dadurch gekennzeichnet**, daß die durchsichtige Platte (P) als Auflage für die erste Waage (W1) dient.

14. Vorrichtung nach Anspruch 11, 12 oder 13,
**dadurch gekennzeichnet**, daß hinter der Trennvorrichtung (S) eine zweite Waage (W2) zum Wiegen der Teilstücke angeordnet ist, deren Meßausgang mit dem Computer C verbunden ist.

15. Vorrichtung nach einem der vorangehenden Ansprüche 11 bis 14,
**dadurch gekennzeichnet**, daß über der durchsichtigen Platte (P) je drei Projektoren (PR) sowie je drei Kameras (K) und unter der Platte (P) je zwei Projektoren (PR) sowie zwei Kameras (K) angeordnet sind.

16. Anordnung nach einem der vorangehenden Ansprüche 11 bis 15,
**dadurch gekennzeichnet**, daß die Projektoren (PR) und die Kameras (K) mittels je eines Gehäuses vor Verschmutzung geschützt sind.

17. Anordnung nach Anspruch 16,
**dadurch gekennzeichnet**, daß in den Gehäusen der Kameras (K) und der Projektoren (PR) ein Überdruck herrscht.

18. Anordnung nach einem der vorangehenden Ansprüche 11 bis 17,
**dadurch gekennzeichnet**, daß die Trennvorrichtung als Säge- oder Schneidevorrichtung ausgebildet ist.

19. Vorrichtung nach einem der vorangehenden Ansprüche 11 bis 18,
**dadurch gekennzeichnet**, daß eine Vorrichtung zum Reinigen der durchsichigen Platte (P) und/oder der Gehäuse der Projektoren (PR) und der Kameras (K) vorgesehen ist.

20. Anordnung nach Anspruch 19,
**dadurch gekennzeichnet**, daß die Vorrichtung zum Reinigen als Niederdruckreiniger, Dampfstrahler oder als führbarer Sprüharm mit einer Gummilippe ausgebildet ist.
